# EUROPEAN PATENT APPLICATION

(11) **EP 0 724 372 A2**
(43) Date of publication of application: **31.07.1996**
(21) Application number: 96100748.1
(22) Date of filing: 19.01.1996
(51) Int. Cl.: H04Q 7/30, H04B 7/26

(54) **Control circuit and method for a TDMA mobile communication system**

(30) Priority: 24.01.1995 GB 9501329
(71) Applicant: MOTOROLA, INC., Schaumburg, IL 60196 (US)
(72) Inventor: Aazami, Sahba, CH-1196 Gland Vaud (CH); Girardeau, James W., Austin, Texas 78703 (US)
(74) Representative: Hudson, Peter David

(57) **Abstract**

A control circuit (10) for use with a digital telecommunications device comprises a number of memory addresses (20) coupled to receive data from a source (30) and an addressing circuit (40) for addressing the memory addresses (20). A time divided transmitter (45) is arranged to read the data from the memory addresses (20) and to transmit the data at a selected one of a number of periodic time divided slots. A control circuit (80) controls the transmitter (45) and the addressing circuit (40). The control circuit (80) selects one of the slots and causes the addressing circuit (40) to offset the addressing of the plurality of memory addresses (20).

## Description

### Field of the Invention

This invention relates to control circuits, and particularly to control circuits for use with digital telecommunications devices.

### Background of the Invention

A digital telecommunications device is typically arranged to transmit and receive in bursts. For transmission, a sample and hold arrangement is used. Data to be transmitted is sampled and held in a data buffer, until a selected periodic time slot of a Time Division Multiple Access (TDMA) frequency, at which point the stored data is transmitted. The buffer must be large enough to hold all the data sampled during the period between successive selected slots. When the selected slot occurs, the existing data in the buffer may then be overwritten with newly sampled data, to be transmitted at the next occurrence of the selected slot, and so on.

The Digital European Cordless Telecommunication (DECT) air interface specification calls for a method of handover between different time slots of a TDMA frequency without any interruption to data transmission.

A problem with this arrangement is that digital speech data must be transmitted in real time as a continuous data stream, and during handover between a first time division slot and a second slot the transmitter must continue to sample and hold data in the buffer until the second slot occurs.

In a portable telecommunications device a data buffer capable of holding the extra data sampled during the delay between slots would require an increase in size by 50%. Furthermore, the time slots have a data transmission capacity almost exactly equal to the amount of data sampled between successive slots. Therefore, not all of the data stored in such a large buffer could be transmitted in one slot.

This invention seeks to provide a control circuit which mitigates the above mentioned disadvantages.

### Summary of the Invention

According to a first aspect of the present invention there is provided a control circuit for use with a digital telecommunications device, comprising: a data terminal for exchanging data signals with a user interface; a wireless terminal for exchanging data signals over an air interface at a selected one of a plurality of periodic time divided slots; a memory coupled between the data terminal and the wireless terminal, for storing data to be exchanged therebetween; addressing means coupled to address the memory when exchanging data between the memory and the wireless terminal; control means coupled to the wireless terminal and to the addressing means, wherein the control means is arranged to select the one of the plurality of slots and cause the addressing means to offset the addressing of the memory, in dependence on the selected slot.

The control means preferably further comprises a state machine and control registers for storing control data to define the function of the state machine. Preferably the memory is further arranged for storing the control data, and the control data is loaded into the control registers between each of the plurality of slots, to define the function of the state machine and hence control the activities of the circuit for the next slot.

Preferably the control circuit is further arranged to handover the exchange of data signals over the air interface from the selected one to another one of the plurality of slots, wherein during handover the control means selects the first and the second slots, and adjusts the offsetting of the addressing of the memory, such that a delay between the occurrence of the selected one and the other one of the plurality of slots does not result in an interruption of the exchange of data signals during handover.

According to a second aspect of the invention there is provided a control method for handover in a digital communications system arranged for communication over a plurality of time divided slots of a radio frequency, the method comprising the steps of: establishing communication between a first device and a second device using a first selected slot of the plurality of slots; selecting a second slot for communication to be handed over to; simultaneously communicating over the first and the second selected slots; and de selecting the use of the first slot when communication is established using the second selected slot.

Preferably data signals intended for transmission from the first device to the second device are transmitted using the first and the second slots during the simultaneous communication, such that a delay between the occurrence of the first selected slot and the second selected slot does not result in an interruption to the data signals during handover between the first and second selected slots.

In this way the size of the memory is able to be kept to a minimum, that being equivalent to the amount of data stored in one slot. Furthermore, during handover, all of the data signals are able to be transmitted because of the simultaneous use of the slots.

### Brief Description of the Drawings

An exemplary embodiment of the invention will now be described with reference to the drawing in which:
FIG.1 shows a preferred embodiment of a control circuit in accordance with the invention.
FIG.2 shows a single frame of a TDMA system in accordance with the invention.
FIG.3 shows a data storage arrangement of part of the control circuit of FIG.1
FIG.4 shows a handover sequence as performed by the control circuit of FIG.1

### Detailed Description of a Preferred Embodiment

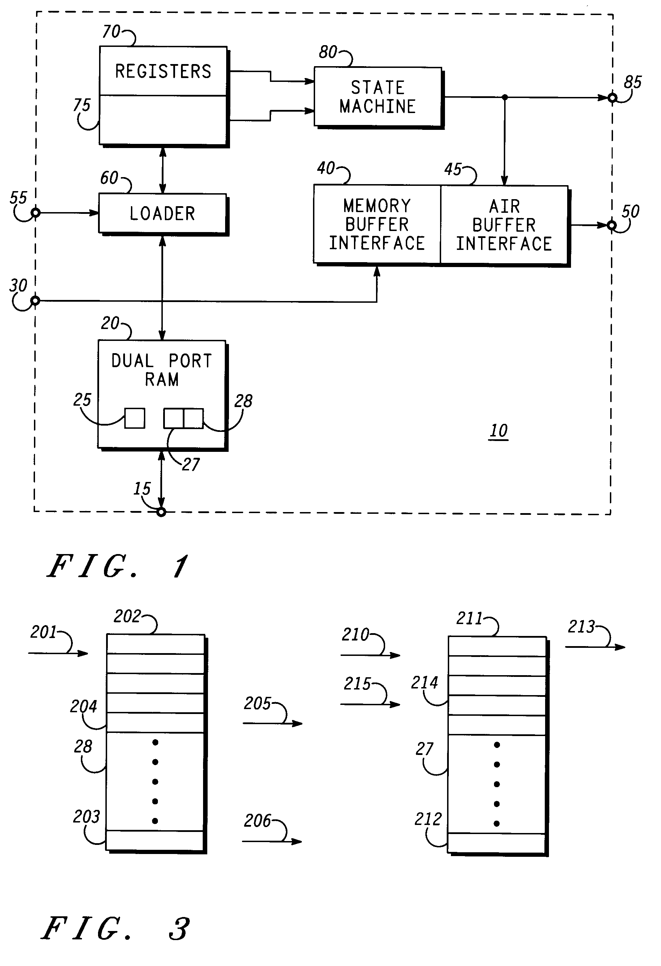

Referring to FIG.1, there is shown a control circuit 10. A bus terminal 15 of the control circuit 10 is coupled to the main bus of a portable TDMA telecommunications device (not shown), arranged to communicate with a TDMA base station (not shown) over a plurality of TDMA slots. The main bus provides connection to a microprocessor of the portable device, and typically to other peripherals such as a user interface and memory.

A dual port Random Access Memory (RAM) 20 comprises a control register table 25 for storing a number of sets of control register values and first and second data buffers 27 and 28 respectively for storing data signals. The first and second data buffers 27 and 28 are arranged to hold 40 bytes of data each in a recirculating fashion to be further described below. The RAM 20 has a first port coupled to the bus terminal 15 and a second port to be further described below.

An audio input/output (I/O) terminal 30 is coupled to receive data signals such as digital speech signals from an audio source, typically a microphone and to send data signals to an audio output such as a loudspeaker. A loader circuit 60 and a memory buffer interface 40 together with the audio I/O terminal 30 are coupled to the second port of the dual port RAM 20.

The memory buffer interface 40 is directly connected to an air buffer interface 45, which has a control input for receiving a control signal to be further described below, and which provides output signals to a transmission device (not shown) via an air output terminal 50.

A timing input terminal 55 receives first and second timing signals from a TDMA timing circuit (not shown) of the portable device, which is synchronised to the base station in a manner to be further described below. The first and second timing signals are input to the loader circuit 60. The loader circuit 60 is further coupled to registers 70 incorporating a master counter 75.

The registers 70 and master counter 75 are both coupled to a state machine 80. The state machine 80 has a control output coupled to an output terminal 85 and to the control input of the air buffer interface 45. Therefore the state machine 80 generates the control signals to control the air buffer interface 45.

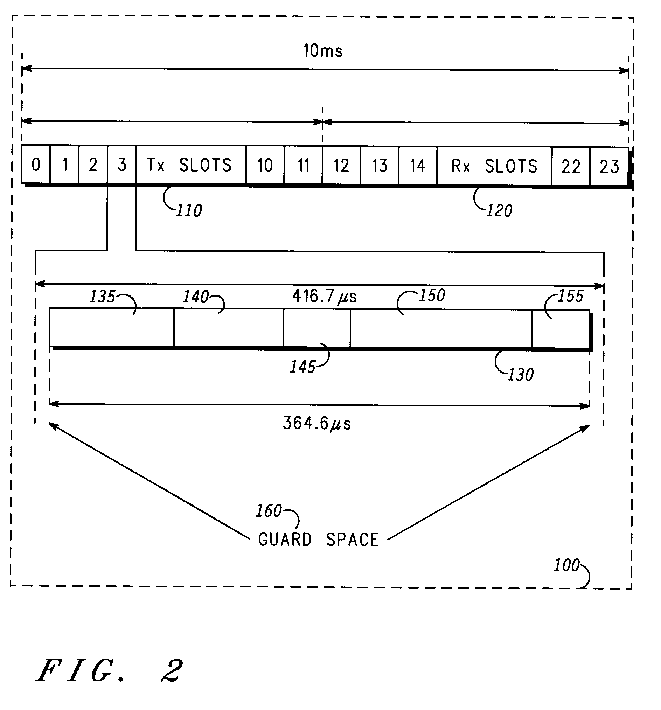

With reference now also to FIG.2, a single exemplary TDMA frame 100 is shown. The TDMA frame 100 comprising 12 transmit (Tx) slots 110 labelled 0 to 11, for base station-to-portable device communication, and 12 receive (Rx) slots 120, labelled 12 to 23 for portable device-to-base station communication. The timing of the slots and of the TDMA frame 100 is determined by the base station, the frame being 10ms in duration,

The TDMA timing circuit of the portable device is arranged to detect the start of the frame 100, and therefore to synchronise the frame timing of the portable device with respect to the base station.

An exemplary slot 130 is shown in detail. The slot 130 is 416.7µs in length and comprises five data fields; a synchronisation field 135 of 32 bits, an A-field of 48 bits, a CRC (error checking) field of 16 bits, a B-field of 320 bits and an X-field of 4 bits, making a total packet of 420 bits (52 Bytes). The slot has a length of 364.6µs. A guard space of 52.1µs between the fields of neighbouring slots gives a total slot length (with the guard space) of 416.7 µs (480-bits) which is 60-Bytes.

One slot of the TDMA frame 100 can hold 40 bytes of data in it's B-field, which is the same amount of data able to be stored in the first and second data buffers 27 and 28. Therefore each of the data buffers 27 and 28 can store enough data to fill the B-field of one slot.

The synchronisation field 135 is used by the TDMA timing circuit of the portable device to synchronise the flame timing as described above.

In operation, the microprocessor derives a set of control register values to define the function of the state machine 80 for each slot of a particular frame.

The first and second timing signals are received by the timing input terminal 55. The first timing signal indicates the start of a new TDMA frame. The sets of control register values are loaded into the control register table of the RAM 20 before the start of the frame.

The loader circuit 60, via the timing input terminal 55, receives the first timing signal, and loads the set of control register values for the first slot, slot 0, from the dual port RAM 20 into the registers 70, and increments the master counter 75. The loader circuit 60 is essentially a specific address pointer circuit. The second timing signal indicates the occurrence of the guard space between slots. Each time the second timing signal is received by the loader circuit 60, the guard space is used to load the next set of control register values from the register table of the RAM 20 (which define the operation of the state machine for the next slot) into the registers 70.

The state machine 80 controls the TDMA packet format for the operation of the next slot. The control signals sent by the state machine 80 include a transmit signal and a receive signal. In this way the registers 70 are able to define the function of the state machine 80 independently for each slot, depending on the set of control register values derived by the microprocessor.

For example, if the base station is transmitting during slot 0, the microprocessor will define slot 0 as an active slot and arrange the first set of control register values (for slot 0) such that they cause the state machine to send the control signal to trigger reception activity of the air buffer interface 45 during slot 0, thereby receiving data signals transmitted from the base station.

Similarly, if the base station is receiving during slot 12, the microprocessor will define slot 12 as an active slot and arrange the thirteenth set of control register values (for slot 12) such that they cause the state machine to send the control signal to trigger transmission activity of the air buffer interface 45 during slot 12.

The audio I/O terminal 30 receives the data signals from the audio source, which could be adaptive differential pulse code modulated (ADPCM) voice signals from a microphone device. The signals are loaded into the second data buffer 28 of the dual port RAM 20 asynchronously with respect to the activities of the rest of the control circuit 10. Typically, 40 bytes of ADPCM data are received at the audio I/O terminal 30 in 10ms (which is the length of one TDMA frame). At the beginning of each TDMA frame 100, the first memory address of the second data buffer 28 is written to, since the second data buffer 28 is arranged to store exactly 40 bytes.

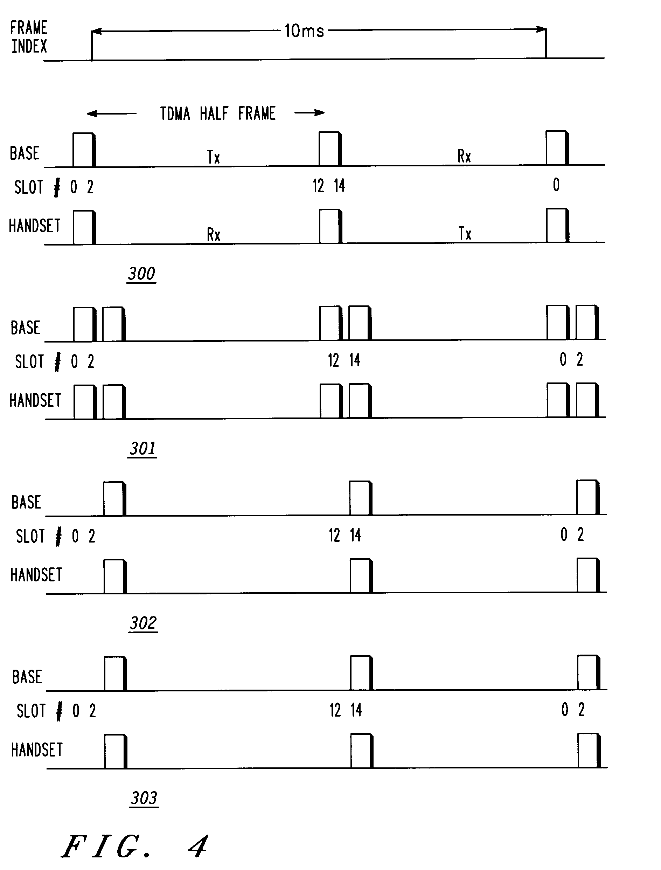

Referring now also to FIG.3, a first incoming data signal 201, containing a first byte of data is written to a first memory address 202 of the second data buffer 28, at the beginning of a TDMA frame.

A last incoming data signal containing a 40th byte of data is written to a last memory address 203 of the second data buffer 28, at the end of the TDMA frame.

The data buffer 28 is read by the memory buffer interface 40 when an active slot occurs for transmission to the base station (active reception slot with respect to base station). However, this is asynchronous with respect to the data signals being written into the second data buffer 28. Therefore an adjustment is made to ensure that the data stored in the second data buffer 28 is read before it is overwritten, as further described below.

Since it is known that the data signals are written to the second data buffer 28 starting with the first memory address 202 at the beginning of each TDMA frame 100, an adjustable read starting position is determined in dependence on the active slot of the TDMA frame 100. Hence, if slot 12 is active, then the adjustable read starting position will be from a memory address 204 in the middle of the second data buffer 28, as shown by arrow 205. Similarly, if slot 23 is active, then the adjustable read starting position will be from the memory address 203, at the end of the second data buffer 28, as shown by arrow 206. In this way the read operation of the second data buffer 28 is dynamically matched to the write operation, in dependence upon the active slot.

Data signals transmitted by the base station are received at the air buffer interface 45 via the air input/output terminal 50 and loaded into the first data buffer 27 by the memory buffer interface 40 with an adjustable write starting position and a wrap-around arrangement as follows.

An address pointer of the memory buffer interface 40 defines the position of each incoming data signal of the first data buffer 27. The adjustable write starting position is determined in dependence on the active slot of the TDMA frame 100, similarly to the adjustable read starting position described above.

If slot 0 is active, then the adjustable write starting position will be at the beginning of the data buffer 27, shown by arrow 210, the first byte of data being written to a first memory address 211. Similarly, if slot 11 is active, then the adjustable write starting position will be in the middle of the first data buffer 27, shown by arrow 215, the first byte of data being written to a memory address 214.

A last incoming data signal, containing a 40th byte of data is loaded into the data buffer 27 at a memory location immediately adjacent the first incoming data signal. Hence a data wrap-around is facilitated by the memory buffer interface 40, with an adjustable write starting position, defined by the address pointer.

The first data buffer 27 is then read without an adjustable starting position, data signals being sent to the audio I/O terminal 30. In this way the write operation of the first data buffer 27 is dynamically matched to the read operation, in dependence upon the active slot.

Referring now also to FIG.4, instantaneous seamless handover for voice channels (between slot pairs) is demonstrated by way of an example showing handover between slot pairs 0-12 and 2-14.

At frame 300 of FIG.4, the decision to handover from slots 0-12 to slots 2-14 is made by the base station and communicated via the A-field 140 of slot 0 to the portable device. At this point, the data signals are all communicated via the slots 0 and 12 because the base station has defined the active slots as slots 0 and 12.

At frame 301, the base station defines slots 2-14 as active in addition to slots 0-12. The portable device responds to the decision of the base station, by causing the first and the third set of control register values to both contain data which sets those slots to be active. Thus the portable device also has slots 2-14 activated, but the air buffer interface 45 continues to use slots 0-12 for communication.

At frame 302, the base station informs the portable device via the A-field 140 of slot 0 to switch the air buffer interface 45 to use data from slots 2-14. The address pointer of the first data buffer 27 is shifted to offset the address of the first data signal written to the first data buffer 27 to a position relative to the new slot 2, as shown by arrow 215 of FIG.3. The wrap-around arrangement of the first data buffer 27 continues from this new starting position, thus ensuring data continuity. Similarly, the address pointer of the second data buffer 28 is shifted to offset the address of the first data signal read from the second data buffer 28 to a position relative to the new slot 14, as shown in frame 206 of FIG.3. The wrap-around arrangement of the second data buffer 28 continues from this new starting position, thus ensuring data continuity.

During frame 302, the air buffer interface 45 uses both sets of slots, in order that data associated with the delay between slot 0 and slot 2, and slot 12 and slot 14, is not lost. Hence the simultaneous use of two pairs of slots in conjunction with the dynamic address offsetting of the first and second data buffers 27 and 28, allows seamless handover to take place.

At frame 303, slots 0-12 are deactivated by the portable device, (by changing the control register values accordingly) and this is communicated back to base station, via the A-field 140 of the next active slot. Upon reception of this information, the base station deactivates slots 0-12. The handover is then completed, with communication now taking place using slots 2-14.

This arrangement allows the size of the first and second data buffers 27 and 28 of the RAM 20 to be kept to a minimum size of 40 bytes, being just large enough to store enough of the data signals required for one TDMA frame communication in either direction. The use of both pairs of slots during frame 301, coupled with the memory offset facilitated by the memory buffer interface 40, allows all of the data signals stored in the first and second data buffers 27 and 28 of the RAM 20 to be transmitted/received before being overwritten.

It will be appreciated that alternate embodiments to the one described above are possible. For example, the TDMA frame need not have the same arrangement of slots as the one described above. Furthermore, the fields within the slots may be different to the ones described above.

## Claims

1. A control circuit for use with a digital telecommunications device, comprising:
a data terminal for exchanging data signals with a user interface;
a wireless terminal for exchanging data signals over an air interface at a selected one of a plurality of periodic time divided slots;
a memory coupled between the data terminal and the wireless terminal, for storing data to be exchanged therebetween;
addressing means coupled to address the memory when exchanging data between the memory and the wireless terminal;
control means coupled to the wireless terminal and to the addressing means, wherein the control means is arranged to select the one of the plurality of slots and cause the addressing means to offset the addressing of the memory, in dependence on the selected slot.

2. The control circuit of claim 1 wherein the control means further comprises a state machine and control registers for storing control data to define the function of the state machine.

3. The control circuit of claim 2 wherein the memory is further arranged for storing the control data, and the control data is loaded into the control registers between each of the plurality of slots, to define the function of the state machine and hence control the activities of the circuit for the next slot.

4. The control circuit of any preceding claim further arranged to handover the exchange of data signals over the air interface from the selected one to another one of the plurality of slots, wherein during handover the control means selects the first and the second slots, and adjusts the offsetting of the addressing of the memory, such that a delay between the occurrence of the selected one and the other one of the plurality of slots does not result in an interruption of the exchange of data signals during handover.

5. A control method for handover in a digital communications system arranged for communication over a plurality of time divided slots of a radio frequency, the method comprising the steps of:
establishing communication between a first device and a second device using a first selected slot of the plurality of slots;
selecting a second slot for communication to be handed over to;
simultaneously communicating over the first and the second selected slots;
and de selecting the use of the first slot when communication is established using the second selected slot.

6. The control method of claim 5 wherein data signals intended for transmission from the first device to the second device are transmitted using the first and the second slots during the simultaneous communication, such that a delay between the occurrence of the first selected slot and the second selected slot does not result in an interruption to the data signals during handover between the first and second selected slots.
